# FASCICULE DE BREVET EUROPEEN

(11) **EP 1 234 757 B1**
(45) Date de publication et mention de la délivrance du brevet: **14.12.2005**
(21) Numéro de dépôt: 02290323.1
(22) Date de dépôt: 08.02.2002
(51) Int. Cl.: B62D 47/00, B60R 5/04, B60P 3/42

(54) **Véhicule automobile de type break transformable en un véhicule à benne ouverte**
Personenkraftwagen , umwandelbar von einem Kombi in einem Pickup
Motor vehicle , transformable from a estate car type into a pickup type

(30) Priorité: 26.02.2001 FR 0102601
(43) Date de publication de la demande: 28.08.2002
(73) Titulaire: Peugeot Citroen Automobiles SA, 92200 Neuilly sur Seine (FR)
(72) Inventeur: Levitre, Gilles, 92330 Gennevilliers (FR); Cazes, Christophe, 75009 Paris (FR)
(74) Mandataire: Lanceplaine, Jean-Claude

(56) Documents cités:
- CA-A- 1 172 289
- DE-A- 19 616 118
- DE-A- 19 929 047
- US-A- 2 997 336
- US-A- 3 419 304
- PATENT ABSTRACTS OF JAPAN vol. 011, no. 385 (M-651), 16 décembre 1987 (1987-12-16) & JP 62 155125 A (DAIHATSU MOTOR CO LTD), 10 juillet 1987 (1987-07-10)

## Description

La présente invention concerne un véhicule automobile de type break, transformable en un véhicule à benne ouverte vers le haut, appelé pick-up.

Les véhicules automobiles de type break comportent un habitacle ayant une partie avant contenant le poste de conduite du véhicule et au moins un siège avant et une partie arrière contenant au moins une rangée de sièges arrière escamotables de manière à constituer une partie d'un plancher plat s'étendant sur toute la partie arrière de l'habitacle du véhicule dans la position rabattue de ladite rangée de sièges arrière.

L'habitacle comporte, à son extrémité arrière, un ouvrant appelé hayon qui est généralement articulé à sa partie supérieure autour d'un axe transversal de telle manière que ce hayon puisse être déplacé entre une position abaissée de fermeture et une position relevée d'ouverture donnant accès, par l'arrière du véhicule, à la partie arrière de l'habitacle.

Ainsi, après avoir rabattu la rangée de sièges arrière, l'utilisateur dispose d'un volume de transport correspondant à l'ensemble de la partie arrière de l'habitacle accessible par l'ouverture dégagée lors du basculement vers le haut du hayon.

Les véhicules automobiles de type break permettent donc de transporter des charges volumineuses qui sont introduites dans le véhicule par l'ouverture arrière.

Toutefois, l'habitacle de ces véhicules est fermé par un toit de sorte que l'espace de rangement et de transport à l'intérieur du véhicule est limité vers le haut.

On connaît par ailleurs, des véhicules automobiles à benne ouverte vers le haut appelés pick-up qui comportent, à l'arrière d'une cabine constituée par la partie antérieure de l'habitacle du véhicule renfermant le poste de conduite, la benne ouverte vers le haut de forme générale parallélépipédique.

La benne ouverte de ce type de véhicules comporte un plancher, deux parois latérales dans la direction longitudinale du véhicule et une paroi d'extrémité arrière ouvrante située à l'opposé de la cabine.

De tels véhicules présentent des avantages en ce qui concerne leur capacité de chargement par rapport à un véhicule classique ou même par rapport à un véhicule de type break, puisque le niveau de chargement de la benne est pratiquement illimité du fait de l'absence d'un toit recouvrant la benne.

Toutefois, les véhicules de type pick-up ne peuvent être utilisés qu'à des fins utilitaires et seulement par le conducteur et éventuellement un passager, ce qui limite leur intérêt dans le cas de leur utilisation par des particuliers.

En outre, ces véhicules sont difficilement utilisables sur de long parcours routier ou autoroutier.

On connaît du document US-A-3 419 304, un véhicule automobile de type break transformable en un véhicule à benne ouverte vers le haut et qui comporte un pavillon formé par un panneau métallique flexible enroulable à l'avant du véhicule. Ce véhicule est pourvu d'un panneau arrière déplaçable par coulissement de façon à transformer le véhicule en break ou en deux configurations à benne ouverte. Ce document décrit un véhicule suivant le préambule de la revendication 1.

Par ailleurs, on connaît par le document DE-A-19929047, un véhicule automobile découvrable et dont le pavillon est formé par une partie fixe et deux parties amovibles. Les deux parties amovibles peuvent être retirées du toit et placées dans un compartiment aménagé dans le coffre.

Enfin, on connaît du document DE-A-19616118, un véhicule automobile de type break transformable en un véhicule à benne ouverte vers le haut et qui comporte un pavillon comprenant une partie fixe et une partie amovible déplaçable entre une position prolongeant la partie fixe et une position dissimulée dans un compartiment ménagé dans le véhicule. Le véhicule comporte aussi un hayon muni d'une vitre escamotable de manière coulissante à l'intérieur d'une partie inférieure dudit hayon.

L'invention a pour but de proposer un véhicule automobile utilisable aussi bien pour le transport de charges que pour le transport de passagers et qui est facilement transformable par des moyens simples et économiques afin de cumuler les avantages des véhicules automobiles de type break et de type pick-up.

L'invention a donc pour objet un véhicule automobile de type break transformable en un véhicule à benne ouverte vers le haut, appelé pick-up, et comportant un habitacle ayant une partie avant contenant un poste de conduite et au moins un siège avant et une partie arrière comprenant au moins une rangée de sièges arrière comportant au moins une assise et au moins un dossier déplaçables entre une position d'utilisation et une position escamotée dans laquelle ladite assise est basculée sensiblement verticalement derrière ledit siège avant et ledit dossier est basculé vers l'avant du véhicule dans le prolongement du plancher, ledit habitacle étant délimité par un plancher, deux parois latérales, un pavillon couvrant l'ensemble de l'habitable et, à sa partie postérieure, par un hayon pivotant et comportant une partie supérieure formant une vitre arrière escamotable de manière coulissante à l'intérieur d'une partie inférieure de hayon, caractérisé en ce que :
- des moyens séparent la partie avant de l'habitacle par rapport à la partie arrière dudit habitacle dans les configurations break et à benne ouverte du véhicule et dans les positions d'utilisation et escamotée de la rangée de sièges arrière,
- le pavillon comporte, successivement dans une direction longitudinale du véhicule et de l'avant à l'arrière, une partie fixe, une première partie mobile et une seconde partie mobile, lesdites parties mobiles étant déplaçables par translation entre une position sensiblement horizontale dans le prolongement de la partie fixe et une position escamotée l'une au-dessus de l'autre et au-dessus de la partie fixe dans la configuration à benne ouverte du véhicule.

Selon d'autres modes particuliers de réalisation de l'invention :
- les moyens de séparation de l'habitacle dans la position d'utilisation de la rangée de sièges arrière sont formés par une vitre déplaçable par coulissement entre une position escamotée dans le dossier de ladite rangée de sièges arrière et une position déployée sensiblement verticale coopérant avec des éléments d'étanchéité disposés sur les parois latérales et le pavillon de l'habitacle,
- les moyens de séparation de l'habitacle dans la position escamotée de la rangée de sièges arrière sont formés par une vitre déplaçable par coulissement entre une position escamotée dans l'assise de la rangée de sièges arrière et une position déployée sensiblement verticale coopérant avec des éléments d'étanchéité disposés sur les parois latérales et le pavillon de l'habitacle,
- la seconde partie mobile est déplaçable entre la position sensiblement horizontale située dans le prolongement de la partie fixe et de la première partie mobile du pavillon et une position partiellement escamotée située au-dessus de la première partie mobile,
- les parties mobiles du pavillon sont déplaçables par translation au moyen de mécanismes de coulissement dissimulés dans des barres de toit fixées sur les bords latéraux du pavillon,
- la partie fixe du pavillon est formée de deux plaques superposées et ménageant entres elles un espace de positionnement des parties mobiles dans la position escamotée desdites parties mobiles,
- les éléments d'étanchéité sont formés chacun par au moins un joint d'étanchéité longitudinal en forme de U, fixé dans un logement ménagé dans les parois latérales et le pavillon, ledit logement étant obturable par une trappe coulissante,
- les éléments d'étanchéité sont formés chacun par au moins un joint d'étanchéité longitudinal en forme de U, ledit joint étant monté sur un support pivotant entre une position escamotée dans un logement ménagé dans les parois latérales et le pavillon et une position en saillie de ce logement, ledit logement étant obturable par une trappe coulissante.

D'autres caractéristiques et avantages de l'invention apparaîtront au cours de la description qui va suivre, donnée à titre d'exemple et faite en se référant aux dessins annexés, sur lesquels :
- la Fig. 1 est une vue en perspective, de trois quarts arrière, d'un véhicule automobile dans sa première configuration ou configuration break,
- la Fig. 2 est une vue en perspective, de trois quarts arrière, du véhicule automobile dans sa seconde configuration à benne ouverte vers le haut ou configuration pick-up,
- les Figs. 3 à 5 sont des vues schématiques en coupe longitudinale montrant différentes configurations de l'habitacle du véhicule automobile, conforme à l'invention,
- la Fig. 6 est une demi-vue en coupe transversale du pavillon en position escamotée,
- les Figs. 7 et 8 sont des vues partielles en coupe d'un premier mode de réalisation des éléments d'étanchéité des moyens de séparation de l'habitacle et des différentes parties du pavillon du véhicule automobile,
- les Figs 9 et 10 sont des vues partielles en coupe d'un second mode de réalisation des éléments d'étanchéité et des moyens de séparation de l'habitacle,
- la Fig. 11 est une vue en perspective, de trois quarts arrière, d'une variante du véhicule automobile dans sa configuration break,
- la Fig. 12 est une vue schématique en coupe longitudinale du véhicule automobile selon la Fig. 11, dans sa configuration pick-up.

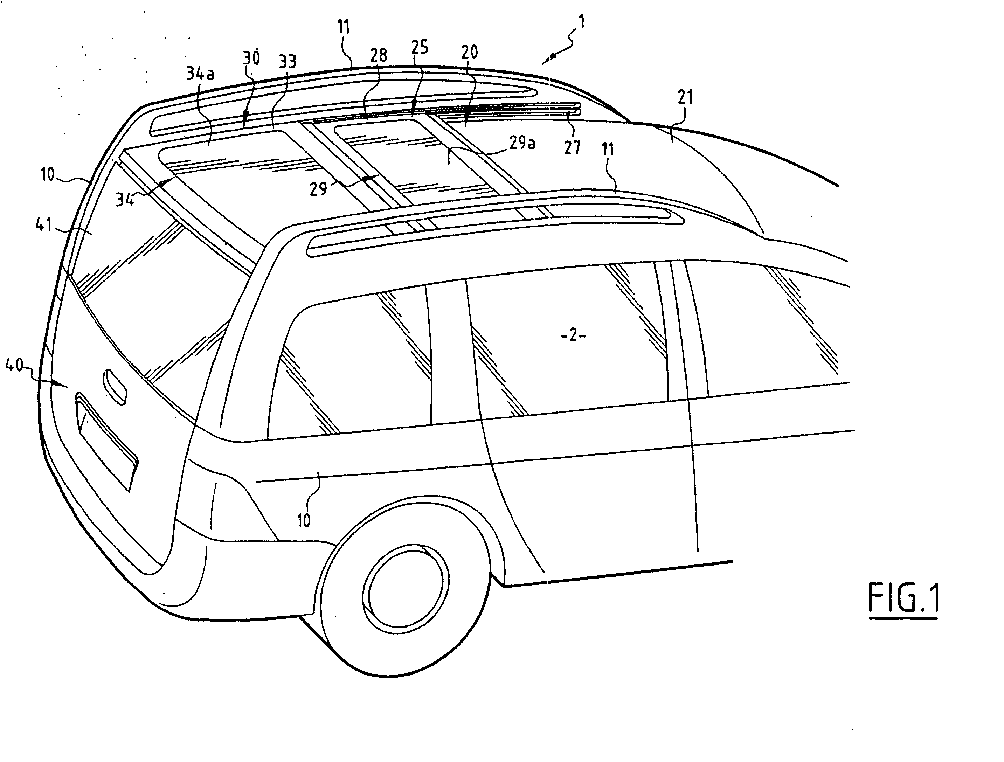

Sur les Figs. 1 à 5, on a représenté un véhicule automobile suivant l'invention de type break désigné de manière générale par la référence 1.

Le véhicule 1 comporte une carrosserie délimitant un habitacle 2 dont la partie avant 2a renferme un poste de conduite du véhicule automobile et au moins un siège avant 3 utilisé par le conducteur du véhicule. Généralement, le véhicule comporte deux sièges avant, un siège passager étant disposé à côté du siège du conducteur.

L'habitacle 2 comporte également une partie arrière 2b dans laquelle est disposée une rangée de sièges arrière 4 constituée, dans l'exemple de réalisation représenté sur les figures, par une banquette comprenant une assise 4a et un dossier 4b. La rangée de sièges arrière 4 peut également être constituée par deux ou trois sièges indépendants.

La partie arrière 2b de l'habitacle 2 est délimitée par un plancher 5, deux parois latérales 10, un pavillon 20 couvrant l'ensemble de l'habitacle 2, et à sa partie postérieure, par un hayon 40.

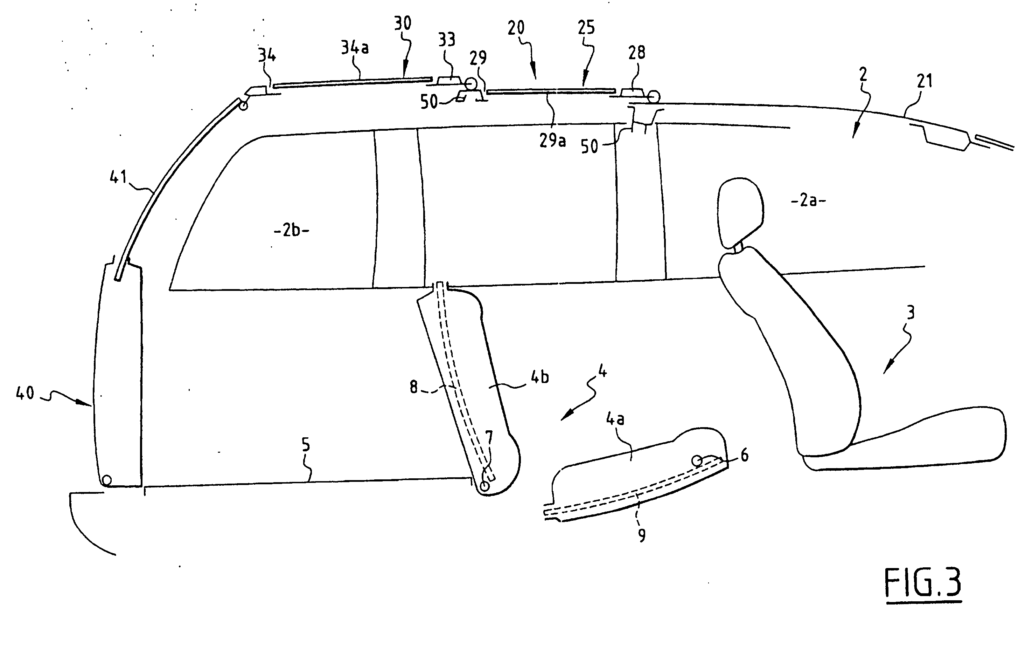

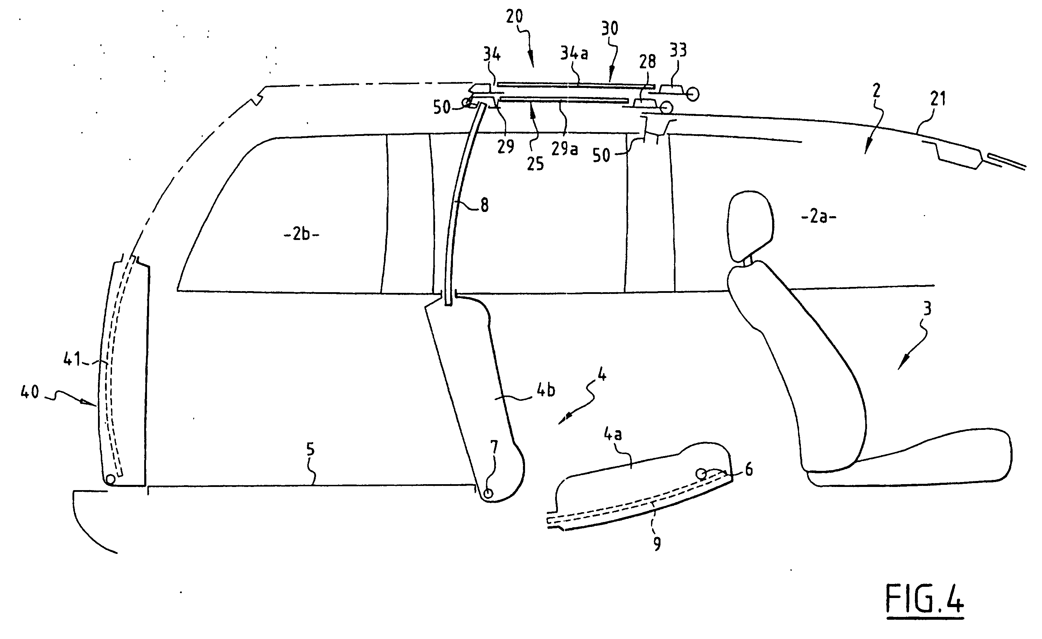

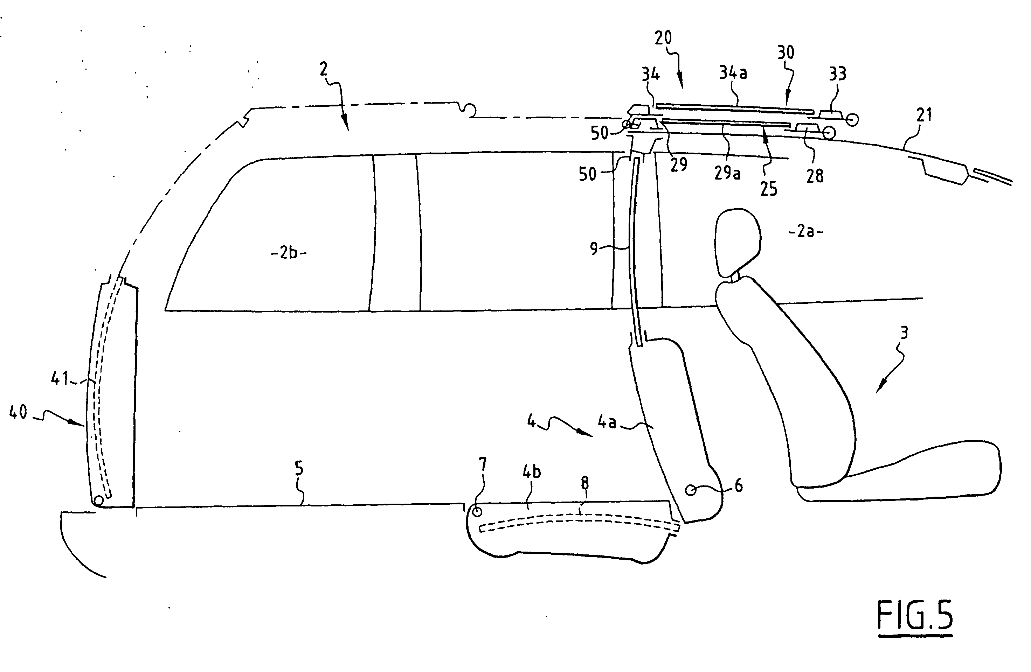

Ainsi que représenté sur les Figs. 3 à 5, l'assise 4a et le dossier 4b de la rangée de sièges arrière 4 sont déplaçables entre une position d'utilisation (Figs. 3 et 4) et une position escamotée (Fig. 5).

Pour cela, l'assise 4a est articulée, à sa partie antérieure, sur le plancher 5 du véhicule automobile au moyen d'un axe 6 s'étendant transversalement par rapport à la direction longitudinale du véhicule.

De même, le dossier 4b est articulé, à sa partie inférieure, sur le plancher 5 du véhicule automobile au moyen d'un axe 7 s'étendant transversalement par rapport à ladite direction longitudinale.

Dans la position escamotée de la rangée de sièges arrière 4, comme représentée à la Fig. 5, l'assise 4a est basculée sensiblement verticalement derrière le siège avant 3 et le dossier 4b est basculé vers l'avant du véhicule dans le prolongement du plancher 5 de façon à constituer une partie de la surface du plancher plat de l'habitacle 2, notamment pour le transport d' objets volumineux.

Le véhicule comporte également des moyens de séparation de la partie avant de l'habitacle 2 par rapport à la partie arrière dudit habitacle aussi bien dans les configurations break et à benne ouverte du véhicule et dans les positions d'utilisation et escamotée de la rangée de sièges arrière 4.

Dans la position d'utilisation de la rangée de sièges arrière 4 (Figs. 3 et 4), les moyens de séparation de l'habitacle 2 sont formés par une vitre 8 déplaçable par coulissement entre une position escamotée (Fig. 3) dans le dossier 4b de la rangée de sièges arrière 4 et une position déployée (Fig. 4) sensiblement verticale coopérant avec des éléments d'étanchéité 50 disposés sur les parois latérales 10 et le pavillon 20 de l'habitacle 2.

Dans cette configuration, une partie du pavillon 20 peut être escamotée, comme on le verra ultérieurement.

Dans la position escamotée de la rangée de sièges arrière 4, ainsi que représentée à la Fig. 5, les moyens de séparation de l'habitacle sont formés par une vitre 9 déplaçable par coulissement entre une position escamotée dans l'assise 4a de la rangée de sièges arrière 4 et une position déployée, sensiblement verticale, coopérant avec des éléments d'étanchéité 50 disposés sur les parois latérales 10 et le pavillon 20 de l'habitacle 2.

Dans cette configuration, une partie du pavillon 20 peut également être escamotée.

Le pavillon 20 comporte, successivement dans une direction longitudinale du véhicule et de l'avant vers l'arrière, une partie fixe 21, opaque, qui peut être constituée par une tôle et, à l'arrière du dossier du siège avant 3, une première partie mobile 25 et une seconde partie mobile 30.

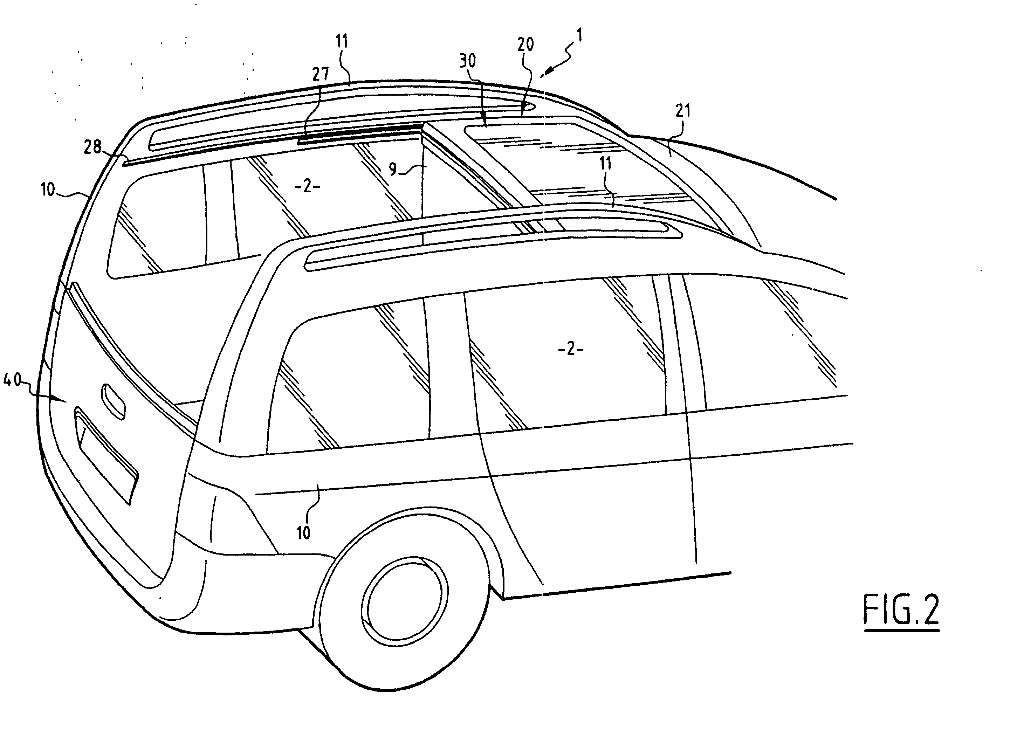

Ces deux parties mobiles 25 et 30 sont déplaçables entre une position sensiblement horizontale dans le prolongement de la partie fixe 21, comme représentée aux Fig. 1 et 3, et une position escamotée dans la configuration à benne ouverte du véhicule automobile de façon à libérer le haut de la partie arrière de l'habitacle 2, comme représentée aux Figs. 2 et 5.

Dans cette position escamotée, les parties mobiles 25 et 30 sont disposées l'une au-dessus de l'autre et au-dessus de la partie fixe 21 du pavillon 20.

De plus, la seconde partie mobile 30 est déplaçable entre une position sensiblement horizontale dans le prolongement de la partie fixe 21 et de la première partie mobile 25, comme représentée aux Figs. 1 et 3, et une position partiellement escamotée située au-dessus de la première partie mobile 25, comme représentée à la Fig. 4.

A cet effet, les parties mobiles 25 et 30 sont déplaçables par translation au moyen de mécanismes de coulissement entre les deux positions.

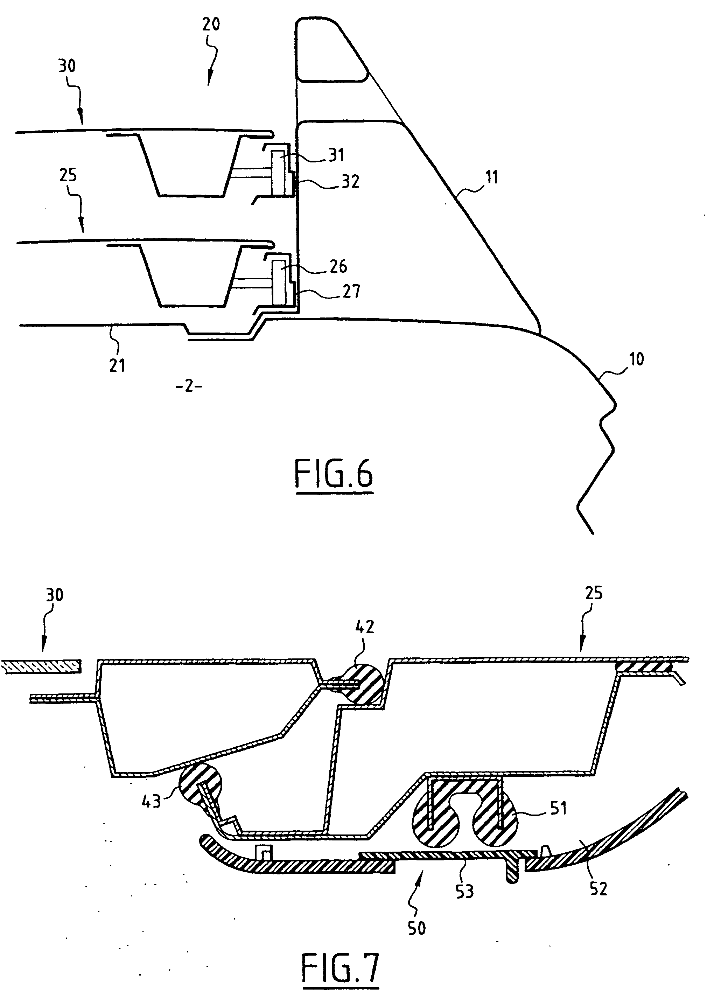

Ainsi que représenté sur les Figs. 2 et 6, les mécanismes de coulissement de la première partie mobile 25 sont dissimulés dans des barres de toit 11 fixées sur les bords latéraux du pavillon 20 et ces mécanismes de coulissement sont formés par exemple par des galets 26 disposés sur les bords latéraux de la première partie mobile 25 et coopérant avec des glissières 27 ménagées dans les barres de toit 11.

De même, les mécanismes de coulissement de la seconde partie mobile 30 sont dissimulés dans les barres de toit 11 et ces mécanismes de coulissement sont formés par exemple par des galets 31 disposés sur les bords latéraux de la seconde partie mobile 30 et coopérant avec des glissières 32 ménagées dans lesdites barres de toit 11.

Les glissières 32 de la seconde partie mobile 30 sont disposées au-dessus des glissières 27 de la première partie mobile 25 et s'étendent de la partie arrière 2b de l'habitacle 2 jusqu'au bord antérieur de la partie fixe 21 du pavillon 20 tandis que les glissières 27 s'étendent sensiblement du dossier 4b de la rangée de sièges arrière 4 en position d'utilisation jusqu'au bord antérieur de ladite partie fixe 21.

Dans la position de couverture de la partie arrière 2b de l'habitacle 2, les parties mobiles 25 et 30 sont décalées vers le haut l'une par rapport à l'autre, ainsi que représentée à la Fig. 3, et dans la position escamotée, lesdites parties mobiles 25 et 30 sont disposées l'une au-dessus de l'autre.

Par ailleurs, les parties mobiles 25 et 30 sont formées par un cadre, respectivement 28 et 33 comportant une ouverture, respectivement 29 et 34, munie d'une vitre, respectivement 29a et 34a, soit fixe, soit déplaçable, dans la configuration break du véhicule automobile, entre une position fermée et une position ouverte permettant ainsi de pouvoir transporter des objets de grande longueur et s'étendant à travers les ouvertures 29 et 34 dans la configuration de type break du véhicule automobile.

Selon une variante, les parties mobiles 25 et 30 peuvent être opaques et constituées chacune par une tôle.

Le hayon 40 disposé à l'arrière du véhicule automobile 1, de façon à constituer une cinquième porte, est monté pivotant, à sa partie inférieure, sur la carrosserie autour d'un axe d'articulation horizontal, non représenté, s'étendant transversalement par rapport à la direction longitudinale du véhicule.

Ainsi, ce hayon 40 est déplaçable par pivotement entre une position sensiblement verticale d'obturation de la partie arrière du véhicule automobile et une position sensiblement horizontale dans le prolongement du plancher 5 de façon à augmenter la surface de chargement de ce plancher 5.

Selon une variante, le hayon 40 peut être monté pivotant sur la carrosserie autour d'un axe d'articulation vertical disposé entre l'un des bords latéraux dudit hayon 40 et une des parois latérales 10.

De plus, le hayon 40 comporte, dans sa partie supérieure, une vitre 41 constituant la lunette arrière du véhicule dans la configuration de type break. Cette vitre 41 est escamotable de manière coulissante à l'intérieur de la partie inférieure du hayon 40.

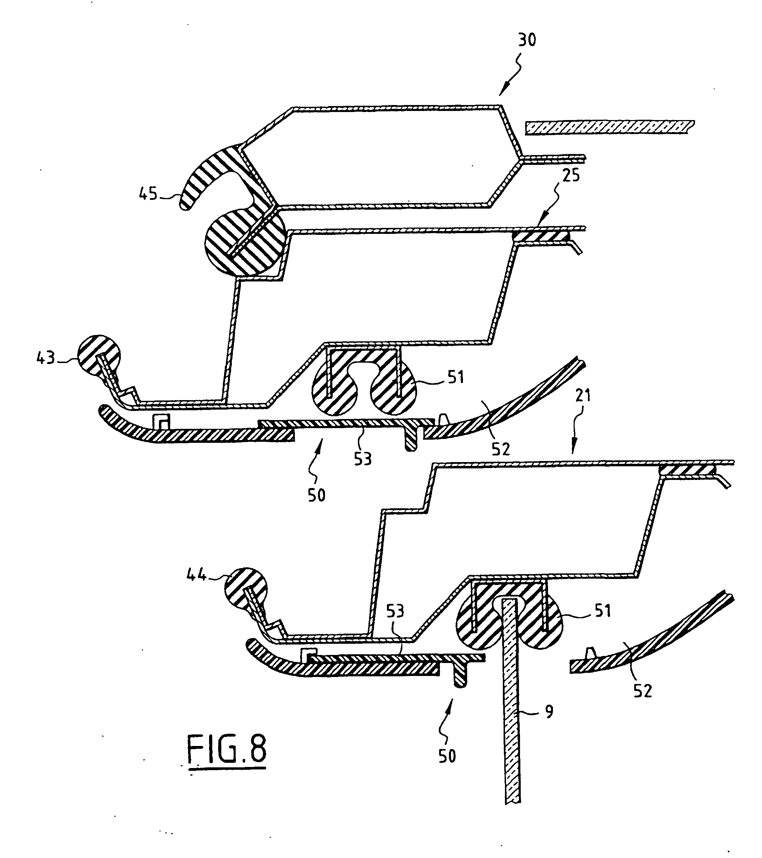

Ainsi que représenté sur les Figs. 7 et 8, le bord antérieur de la seconde partie mobile 30 comporte un joint d'étanchéité 42 coopérant avec le bord postérieur de la première partie mobile 25, tandis que cette première partie mobile 25 comporte sur ses bords antérieur et postérieur des joints d'étanchéité 43 qui coopèrent avec la seconde partie mobile 30 et la partie fixe 21 de façon à assurer l'étanchéité.

De même, le bord postérieur de cette partie fixe 21 comporte un joint d'étanchéité 44 coopérant avec le bord antérieur de la première partie mobile 25 de façon à assurer l'étanchéité.

Enfin, le bord postérieur de la seconde partie mobile 30 comporte un joint d'étanchéité 45 en forme de U (Fig. 8) destiné à coopérer avec la vitre coulissante 41 du hayon 40 dans la configuration break du véhicule automobile, c'est à dire dans la position déployée de cette vitre 41.

Selon un premier mode de réalisation représenté sur les Figs. 7 et 8, les éléments d'étanchéité 50 entre les vitres coulissantes 8 et 9 avec respectivement les parois latérales 10 et la face interne du pavillon 20 sont formés par au moins un joint d'étanchéité 51 longitudinal et en forme de U, fixé dans un logement 52 ménagé sur lesdites parois latérales 10 et ladite face interne du pavillon 20 et obturable par une trappe 53 coulissante.

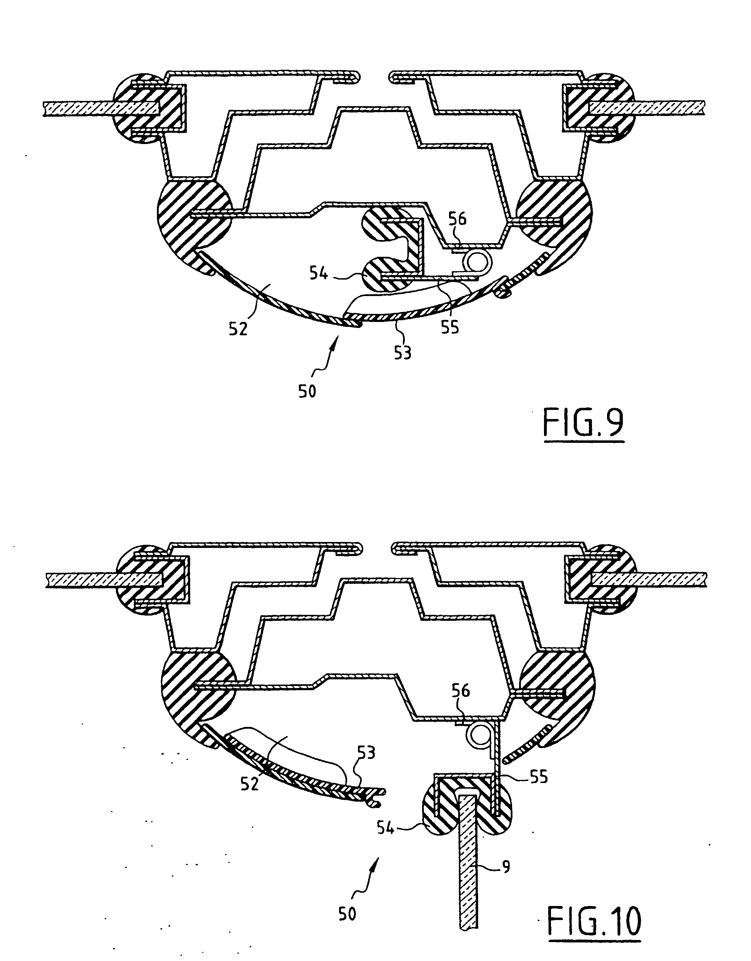

Selon une variante représentée sur les Figs. 9 et 10, les éléments d'étanchéité 50 sont formés chacun par un joint d'étanchéité 54 longitudinal et en forme de U. Ce joint 54 est monté sur un support 55 pivotant entre une position escamotée dans un logement 52 ménagé dans les parois latérales10 et la face interne du pavillon 20 (Fig. 9) et une position en saillie de ce logement 52 permettant ainsi au bord de la vitre 8 ou 9 de pénétrer dans le joint d'étanchéité 54 (Fig.10).

Ce logement 52 est également obturable par une trappe 53.

Le joint d'étanchéité 54 et le support 55 sont rappelés en position en saillie du logement 52 par un ressort de torsion 56 monté sur l'axe de pivotement de ce support 55.

Ainsi, lors du déploiement de la vitre 8 ou 9, l'utilisateur ouvre les logements 52 en faisant coulisser les trappes 53 de telle manière que les bords de la vitre correspondante pénètrent dans les joints d'étanchéité 51 ou 54.

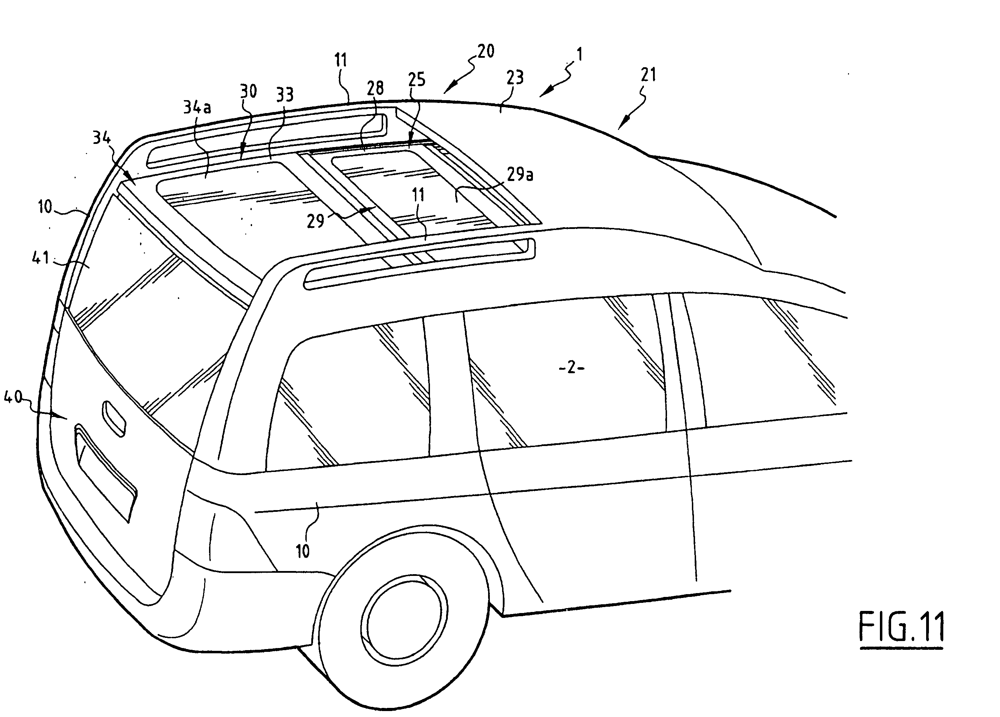

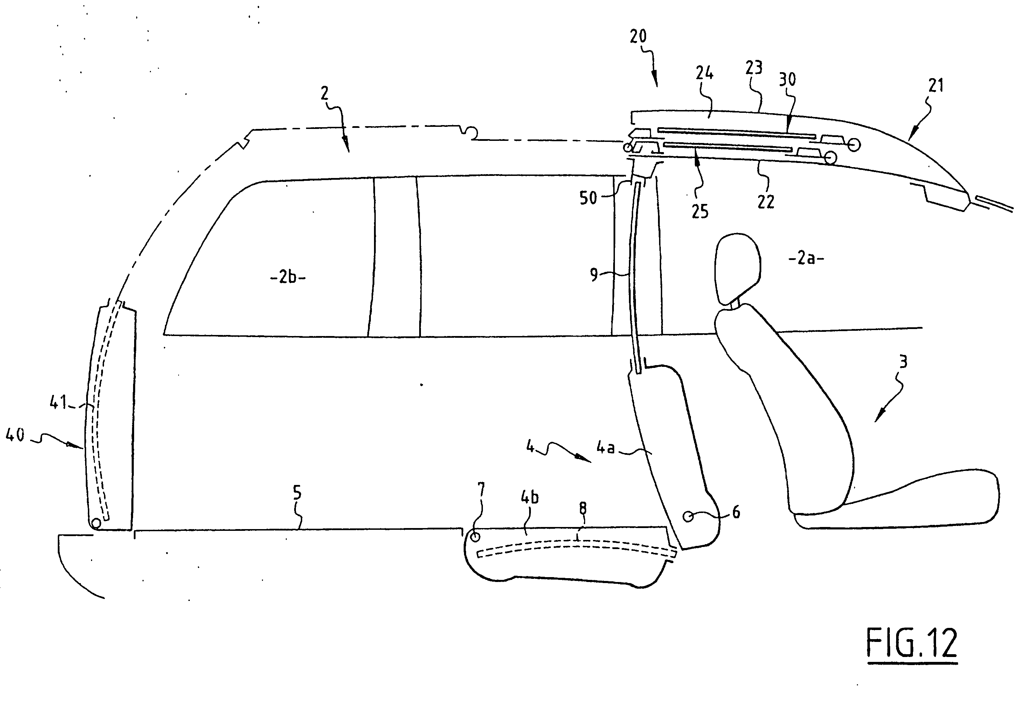

Selon un autre mode de réalisation représenté sur les Figs. 11 et 12, la partie fixe 21 du pavillon 20 est formée de deux plaques superposées, respectivement 22 et 23, qui ménagent entres elles un espace 24 de positionnement des parties mobiles 25 et 30 dans la position escamotée desdites parties mobiles, ainsi que représentée à la Fig. 12. Dans ce mode de réalisation, les autres éléments sont identiques aux précédents modes de réalisation.

Dans la configuration break représentée à la Fig. 3, la rangée de sièges arrière 4 est en position d'utilisation et les parties mobiles 25 et 30 du pavillon 20 sont disposées sensiblement dans la prolongation de la partie fixe 21 de façon à fermer le haut de la partie arrière 2b de l'habitacle 2. La vitre 41 du hayon 40 est en position déployée de façon à constituer la lunette arrière de l'habitacle 2.

Dans cette configuration, la vitre mobile 8 du dossier 4 peut également être déployée de façon à isoler la partie arrière 2b du reste de l'habitacle 2.

La vitre 34a de la seconde partie mobile 30 peut également être ouverte de façon à transporter des objets de grande longueur.

Le véhicule automobile 1 selon l'invention peut être utilisé selon deux configurations pick-up, l'une représentée à la Fig. 4 dans laquelle la rangée de sièges arrière 4 est en position d'utilisation de façon à pouvoir transporter plus de deux personnes et l'autre représentée à la Fig. 5 ou 12 dans laquelle la rangée de sièges arrière est en position escamotée permettant ainsi d'augmenter la surface de chargement du plancher 5.

Dans la première configuration pick-up, la seconde partie mobile 30 est escamotée au-dessus de la première partie mobile 25 et la vitre 41 du hayon 40 est escamotée dans la partie inférieure de ce hayon 40, tandis que la vitre 8 du dossier 2b est déployée afin d'isoler la partie arrière 2b du reste de l'habitacle 2. L'étanchéité est assurée par les éléments d'étanchéité 50.

Dans la seconde configuration pick-up, les parties mobiles 25 et 30 du pavillon 20 sont escamotées au-dessus de la partie fixe 21 et la rangée de sièges arrière 4 est aussi escamotée.

Dans cette configuration, la vitre 41 du hayon 40 est escamotée dans la partie inférieure de ce hayon 40 de façon à libérer complètement la partie arrière 2b de l'habitacle 2 et la vitre 9 est déployée pour isoler la partie arrière 2b du reste de l'habitacle 2. L'étanchéité est assurée par les éléments d'étanchéité 50.

Dans tous les cas, le véhicule automobile selon l'invention permet de passer facilement d'une configuration break à une configuration pick-up de telle sorte que ce véhicule puisse servir aussi bien pour le transport de passagers ou de charges dans un habitacle entièrement fermé, que pour le transport de charges dans une benne ouverte vers le haut et facilement accessible par l'arrière.

Le véhicule automobile selon l'invention est particulièrement économique du fait de sa polyvalence et peut éviter l'achat d'un second véhicule, pour un utilisateur désirant effectuer des transports sur route à grande distance de charges ou de passagers, dans de bonne condition de confort et de protection climatique, et des transports purement utilitaires de charges volumineuses, dans une utilisation locale.

## Revendications

1. Véhicule automobile de type break transformable en un véhicule à benne ouverte vers le haut, appelé pick-up, et comportant un habitacle (2) délimité par un plancher (5), deux parois latérales (10), un pavillon (20) couvrant l'ensemble de l'habitable (2) et, à sa partie postérieure, par un hayon (40) pivotant et comportant une partie supérieure formant une vitre arrière (41) escamotable de manière coulissante à l'intérieur d'une partie inférieure de hayon (40), ledit habitacle (2) ayant une partie avant (2a) contenant un poste de conduite et au moins un siège avant (3) et une partie arrière (2b) comprenant au moins une rangée de sièges arrière (4) comportant au moins une assise (4a) et au moins un dossier (4b) déplaçables entre une position d'utilisation et une position escamotée dans laquelle ladite assise (4a) est basculée sensiblement verticalement derrière ledit siège avant (3) et ledit dossier (4b) est basculé vers l'avant du véhicule dans le prolongement du plancher (5), **caractérisé en ce que** :
- des moyens (8 ; 9) séparent la partie avant (2a) de l'habitacle (2) par rapport à la partie arrière (2b) dudit habitacle (2) dans les configurations break et à benne ouverte du véhicule et dans les positions d'utilisation et escamotée de la rangée de sièges arrière (4),
- le pavillon (20) comporte, successivement dans une direction longitudinale du véhicule et de l'avant à l'arrière, une partie fixe (21), une première partie mobile (25) et une seconde partie mobile (30), lesdites parties mobiles (25 ; 30) étant déplaçables par translation entre une position sensiblement horizontale dans le prolongement de la partie fixe (21) et une position escamotée l'une au-dessus de l'autre et au-dessus de la partie fixe (21) dans la configuration à benne ouverte du véhicule.

2. Véhicule automobile selon la revendication 1, **caractérisé en ce que** les moyens de séparation de l'habitacle (2) dans la position d'utilisation de la rangée de sièges arrière (4) sont formés par une vitre (8) déplaçable par coulissement entre une position escamotée dans le dossier (4b) de ladite rangée de sièges arrière (4) et une position déployée sensiblement verticale coopérant avec des éléments d'étanchéité (50) disposés sur les parois latérales (10) et le pavillon (20) de l'habitacle (2).

3. Véhicule automobile selon la revendication 1, **caractérisé en ce que** les moyens de séparation de l'habitacle (2) dans la position escamotée de la rangée de sièges arrière (4) sont formés par une vitre (9) déplaçable par coulissement entre une position escamotée dans l'assise (4a) de la rangée de sièges arrière (4) et une position déployée sensiblement verticale coopérant avec des éléments d'étanchéité (50) disposés sur les parois latérales (10) et le pavillon (20) de l'habitacle (2).

4. Véhicule automobile selon la revendication 1, **caractérisé en ce que** la seconde partie mobile (30) est déplaçable entre la position sensiblement horizontale située dans le prolongement de la partie fixe (21) et de la première partie mobile (25) du pavillon (20) et une position partiellement escamotée située au-dessus de la première partie mobile (25).

5. Véhicule automobile selon l'une quelconque des revendications précédentes, **caractérisé en ce que** les parties mobiles (25 ; 30) du pavillon (20) sont déplaçables par translation au moyen de mécanismes de coulissement dissimulés dans des barres de toit (11) fixées sur les bords latéraux du pavillon (20).

6. Véhicule automobile selon l'une quelconque des revendications précédentes, **caractérisé en ce que** la partie fixe (21) du pavillon (20) est formée de deux plaques (22, 23) superposées et ménageant entre elles un espace (24) de positionnement des parties mobiles (25 ; 30) dans la position escamotée desdites parties mobiles.

7. Véhicule automobile selon la revendication 2 ou 3, **caractérisé en ce que** les éléments d'étanchéité (50) sont formés chacun par au moins un joint d'étanchéité (51) longitudinal et en forme de U, fixé dans un logement (52) ménagé dans les parois latérales (10) et le pavillon (20), ledit logement (52) étant obturable par une trappe (53) coulissante.

8. Véhicule automobile selon la revendication 2 ou 3, **caractérisé en ce que** les éléments d'étanchéité (50) sont formés chacun par au moins un joint d'étanchéité (54) longitudinal et en forme de U, ledit joint étant monté sur un support (55) pivotant entre une position escamotée dans un logement (52) ménagé dans les parois latérales (10) et le pavillon (20) et une position en saillie de ce logement (52), ledit logement (52) étant obturable par une trappe (53) coulissante.

9. Véhicule automobile selon l'une quelconque des revendications précédentes, **caractérisé en ce que** les parties mobiles (25 ; 30) du pavillon (20) sont opaques.

10. Véhicule automobile selon l'une quelconque des revendications 1 à 8, **caractérisé en ce que** les parties mobiles (25 ; 30) du pavillon (20) sont formées chacune par un cadre (28 ; 33) comportant une ouverture (29 ; 34) munie d'une vitre (29a, 34a) fixe.

11. Véhicule automobile selon l'une quelconque des revendications 1 à 8, **caractérisé en ce que** les parties mobiles (25 ; 30) du pavillon (20) sont formées chacune par un cadre (28 ; 33) comportant une ouverture (29 ; 34) munie d'une vitre (29a ; 34a) déplaçable, dans la configuration break du véhicule, entre une position ouverte et une position fermée.

## Patentansprüche

1. Kraftfahrzeug des Kombityps, das in ein Fahrzeug mit nach oben offener Karosserie, das Pickup genannt wird, umwandelbar ist und eine Fahrgastzelle (2) umfasst, die begrenzt ist durch einen Boden (5), zwei Seitenwände (10), ein Dach (20), das die gesamte Fahrgastzelle (2) abdeckt, und in ihrem hinteren Teil durch eine schwenkbare Heckklappe (40), die einen oberen Abschnitt umfasst, der eine Heckfensterscheibe (41) bildet, die gleitend in einen unteren Abschnitt der Heckklappe (40) einfahrbar ist, wobei die Fahrgastzelle (2) einen vorderen Teil (2a), der einen Führerstand und wenigstens einen Vordersitz (3) enthält, und einen hinteren Teil (2b) aufweist, der wenigstens eine Rücksitzreihe (4) mit wenigstens einer Sitzfläche (4a) und wenigstens einer Rückenlehne (4b) umfasst, die zwischen einer Benutzungsposition und einer eingeklappten Position, in der die Sitzfläche (4a) im Wesentlichen vertikal hinter den Vordersitz (3) geklappt ist und die Rückenlehne (4b) in der Verlängerung des Bodens (5) zur Vorderseite des Fahrzeugs gekippt ist, verlagerbar sind, **dadurch gekennzeichnet, dass**:
- Mittel (8; 9) den vorderen Teil (2a) der Fahrgastzelle (2) von dem hinteren Teil (2b) der Fahrgastzelle (2) in der Kombi-Konfiguration und in der Konfiguration mit offener Karosserie des Fahrzeugs sowohl in der Benutzungsposition als auch in der eingeklappten Position der Rücksitzreihe (4) trennen,
- das Dach (20) nacheinander in Längsrichtung des Fahrzeugs von worn nach hinten einen festen Teil (21), einen ersten beweglichen Teil (25) und einen zweiten beweglichen Teil (30) umfasst, wobei die beweglichen Teile (25; 30) durch Längsverschiebung zwischen einer im Wesentlichen horizontalen Position in der Verlängerung des festen Teils (21) und einer übereinander geklappten Position über dem festen Teil (21) in der Konfiguration mit offener Fahrzeugkarosserie verlagerbar sind.

2. Kraftfahrzeug nach Anspruch 1, **dadurch gekennzeichnet, dass** die Mittel zum Trennen der Fahrgastzelle (2) in der Benutzungsposition der Rücksitzreihe (4) durch eine Fensterscheibe (8) gebildet sind, die durch Gleiten zwischen einer in die Rückenlehne (4b) der Rücksitzreihe (4) eingefahrenen Position und einer im Wesentlichen vertikalen, ausgefahrenen Position, in der sie mit Dichtungselementen (50) zusammenwirkt, die in den Seitenwänden (10) und im Dach (20) der Fahrgastzelle (2) angeordnet sind, verlagerbar ist.

3. Kraftfahrzeug nach Anspruch 1, **dadurch gekennzeichnet, dass** die Mittel zum Trennen der Fahrgastzelle (2) in der eingeklappten Position der Rücksitzreihe (4) durch eine Fensterscheibe (9) gebildet sind, die durch Gleiten zwischen einer in den Sitz (4a) der Rücksitzreihe (4) eingefahrenen Position und einer im Wesentlichen vertikalen, ausgefahrenen Position, in der sie mit Dichtungselementen (50) zusammen wirkt, die an den Seitenwänden (10) und am Dach (20) der Fahrgastzelle (2) angeordnet sind, verlagerbar ist.

4. Kraftfahrzeug nach Anspruch 1, **dadurch gekennzeichnet, dass** der zweite bewegliche Teil (30) zwischen der im Wesentlichen horizontalen Position, die sich in der Verlängerung des festen Teils (21) und des ersten beweglichen Teils (25) des Dachs (20) befindet, und einer teilweise eingeklappten Position, die sich über dem ersten beweglichen Teil (25) befindet, verlagerbar ist.

5. Kraftfahrzeug nach einem der vorhergehenden Ansprüche, **dadurch gekennzeichnet, dass** die beweglichen Teile (25; 30) des Dachs (20) mittels Gleitmechanismen, die in an den Seitenrändern des Dachs (20) befestigten Dachleisten (11) verborgen sind, translatorisch verlagerbar sind.

6. Kraftfahrzeug nach einem der vorhergehenden Ansprüche, **dadurch gekennzeichnet, dass** der feste Teil (21) des Dachs (20) aus zwei Platten (22, 23) gebildet ist, die übereinander liegen und zwischen sich einen Raum (24) für die Positionierung der beweglichen Teile (25; 30) in der eingefahrenen Position der beweglichen Teile bilden.

7. Kraftfahrzeug nach Anspruch 2 oder 3, **dadurch gekennzeichnet, dass** die Dichtungselemente (50) jeweils aus wenigstens einem longitudinalen und U-formigen Dichtungsgummi (51) gebildet sind, der in einem in den Seitenwänden (10) und im Dach (20) ausgebildeten Aufnahmesitz (52) befestigt ist, wobei der Aufnahmesitz (52) durch eine gleitende Klappe (53) verschließbar ist.

8. Kraftfahrzeug nach Anspruch 2 oder 3, **dadurch gekennzeichnet, dass** die Dichtungselemente (50) jeweils aus wenigstens einem longitudinalen und U-formigen Dichrungsgummi (54) gebildet sind, wobei die Dichtung an einem Träger (55) angebracht ist, der zwischen einer eingefahrenen Position in dem in den Seitenwänden. (10) und im Dach (20) ausgebildeten Aufnahmesitz (52) und einer von diesem Aufnahmesitz (52) vorstehenden Position schwenkbar ist, wobei der Aufnahmesitz durch eine gleitende Klappe (53) verschließbar ist.

9. Kraftfahrzeug nach einem der vorhergehenden Ansprüche, **dadurch gekennzeichnet, dass** die beweglichen Teile (25; 30) des Dachs (20) lichtundurchlässig sind.

10. Kraftfahrzeug nach einem der Ansprüche 1 bis 8, **dadurch gekennzeichnet, dass** die beweglichen Teile (25; 30) des Dachs (20) jeweils durch einen Rahmen (28; 33) gebildet sind, der eine mit einer festen Fensterscheibe (29a, 34a) versehene Öffnung (29; 34) aufweist.

11. Kraftfahrzeug nach einem der Ansprüche 1 bis 8, **dadurch gekennzeichnet, dass** die beweglichen Teile (25; 30) des Dachs (20) jeweils durch einen Rahmen (28; 33) gebildet sind, der eine mit einer Fensterscheibe (29a; 34a) versehene Öffnung (29; 34) umfasst und in der Kombi-Konfiguration des Fahrzeugs zwischen einer geöffneten Position und einer geschlossenen Position verlagerbar ist.

## Claims

1. Motor vehicle of the estate car type which can be converted into a vehicle with a body which is open at the top, known as a pick-up, and including a passenger compartment (2) delimited by a floor (5), by two side walls (10), by a roof (20) covering the whole of the passenger compartment (2) and, at its rear part, by a pivoting tailgate (40) including an upper part forming a rear window (41) which can be retracted in a sliding manner inside a lower part of the tailgate (40), the said passenger compartment (2) having a front part (2a), containing a driver's position and at least one front seat (3), and a rear part (2b) comprising at least one row of rear seats (4) including at least one sitting surface (4a) and at least one backrest (4b) which are able to be moved between a use position and a retracted position in which the said sitting surface (4a) is tilted substantially vertically behind the said front seat (3) and the said backrest (4b) is tilted towards the front of the vehicle in the continuation of the floor (5), **characterized in that**:
- means (8; 9) separate the front part (2a) of the passenger compartment (2) from the rear part (2b) of the said passenger compartment (2) in the estate car and open-body configurations of the vehicle and in the use and retracted positions of the row of rear seats (4),
- the roof (20) includes, successively in a longitudinal direction of the vehicle, and from the front towards the rear, a fixed part (21), a first moving part (25) and a second moving part (30), the said moving parts (25; 30) being able to be moved translationally between a substantially horizontal position in the continuation of the fixed part (21) and a retracted position one above the other and above the fixed part (21), in the open-body configuration of the vehicle.

2. Motor vehicle according to Claim 1, **characterized in that** the means for separating the passenger compartment (2), when the row of rear seats (4) is in the use position, are formed by a glass panel (8) which can be moved by sliding between a retracted position in the backrest (4b) of the said row of rear seats (4) and a substantially vertical deployed position in which it engages with sealing elements (50) arranged on the side walls (10) and the roof (20) of the passenger compartment (2).

3. Motor vehicle according to Claim 1, **characterized in that** the means for separating the passenger compartment (2), when the row of rear seats (4) is in the retracted position, are formed by a glass panel (9) which can be moved by sliding between a retracted position in the sitting surface (4a) of the row of rear seats (4) and a substantially vertical deployed position in which it engages with sealing elements (50) arranged on the side walls (10) and the roof (20) of the passenger compartment (2).

4. Motor vehicle according to Claim 1, **characterized in that** the second moving part (30) can be moved between the substantially horizontal position situated in the continuation of the fixed part (21) and of the first moving part (25) of the roof (20) and a partially retracted position situated above the first moving part (25).

5. Motor vehicle according to any one of the preceding claims, **characterized in that** the moving parts (25; 30) of the roof (20) can be moved translationally by means of sliding mechanisms concealed within roof bars (11) fastened to the lateral edges of the roof (20).

6. Motor vehicle according to any one of the preceding claims, **characterized in that** the fixed part (21) of the roof (20) is formed by two superposed plates (22, 23) forming between them a space (24) for positioning the moving parts (25; 30) when the said moving parts are in the retracted position.

7. Motor vehicle according to Claim 2 or 3, **characterized in that** the sealing elements (50) are each formed by at least one longitudinal U-shaped seal (51) fixed in a housing (52) formed in the side walls (10) and the roof (20), the said housing (52) being able to be closed off by a sliding hatch (53).

8. Motor vehicle according to Claim 2 or 3, **characterized in that** the sealing elements (50) are each formed by at least one longitudinal U-shaped seal (54), the said seal being mounted on a pivoting support (55) which pivots between a retracted position in a housing (52) formed in the side walls (10) and the roof (20) and a position in which it projects from this housing (52), the said housing (52) being able to be closed off by a sliding hatch (53).

9. Motor vehicle according to any one of the preceding claims, **characterized in that** the moving parts (25; 30) of the roof (20) are opaque.

10. Motor vehicle according to any one of Claims 1 to 8, **characterized in that** the moving parts (25; 30) of the roof (20) are each formed by a frame (28; 33) including an opening (29; 34) provided with a fixed glass panel (29a, 34a).

11. Motor vehicle according to any one of Claims 1 to 8, **characterized in that** the moving parts (25; 30) of the roof (20) are each formed by a frame (28; 33) including an opening (29; 34) provided with a glass panel (29a; 34a) which, in the estate car configuration of the vehicle, can be moved between an open position and a closed position.
